(19) Europäisches Patentamt

European Patent Office

Office européen des brevets

(11) EP 1 721 743 A1

(12) EUROPEAN PATENT APPLICATION
published in accordance with Art. 158(3) EPC

(43) Date of publication:
15.11.2006 Bulletin 2006/46

(51) Int Cl.:
B41F 31/02 (2006.01)  B41F 31/04 (2006.01)
B41F 33/00 (2006.01)  B41F 33/14 (2006.01)
G01J 3/46 (2006.01)  G01N 21/27 (2006.01)

(21) Application number: 04793378.3

(22) Date of filing: 29.10.2004

(86) International application number:
PCT/JP2004/016458

(87) International publication number:
WO 2005/084950 (15.09.2005 Gazette 2005/37)

(84) Designated Contracting States:
DE GB IT

(30) Priority: 05.03.2004  JP 2004062085

(71) Applicant: MITSUBISHI HEAVY INDUSTRIES, LTD.
Tokyo 108-8215 (JP)

(72) Inventor: NAGAI, Hideaki,
HIROSHIMA Res. & Developm. Center
Hiroshima-shi,
Hiroshima 7338553 (JP)

(74) Representative: HOFFMANN EITLE
Patent- und Rechtsanwälte
Arabellastrasse 4
81925 München (DE)

(54) **COLOR TONE CONTROL METHOD AND DEVICE FOR PRINTING MACHINE**

(57) For controlling the tone of the printed matter, the measurement data is stably obtained against various error factors and the ink supply is precisely controlled. The process data 11 is used as target data of the print matter. The dot area rate in the process data is calculated along the paper transport direction within the ink key width. Then, the selective integral and averaging 23 is executed on the calculated dot area rate greater than a prescribed threshold and the dot area rate in the actually printed matter at points corresponding with each other. The tone is controlled on the basis of the control quantity such as the ink key opening and the ink source opening obtained on the basis of the dot area rate and the spectral reflection rate as calculated by the selective integral and averaging.

FIG. 1

11: CIP3(4) INTERPRETATION
12: UPSTREAM DATA
13: TEMPLATE IMAGE GENERATION
14: TEMPLATE IMAGE
15: PRINT SAMPLE
16: MEASUREMENT
17: SPECTRAL REFLECTION RATE
18: SINGLE WAVELENGTH
    EXTRACTION DATA
19: RESOLUTION TRANSFORMATION
20: MATCHING IMAGE
21: TEMPLATE MATCHING
22: CORDINATES TRANSFORM
    INFORMATION

EP 1 721 743 A1

**Description**

Technical Field

The present invention relates to a tone control method and apparatus for a printing machine wherein colors in an entire or a part of a two dimensional area of a pattern are measured and the measured colors are used for controlling an opening of an ink key in the printing machine, thereby controlling the tone of the print pattern.

Background Art

In order to adjust the color to be printed requested by a client, a measurement apparatus such as a line sensor or a two dimensional camera measures a once printed pattern as a whole or a part is measured and then the tone is adjusted by calculating the ink key opening, the rotational speed of the ink source roller.

However, the measured data actually contains various errors. For example, the measured data is influenced by an error caused by a position of the printed matter on the off-line measurement apparatus and by errors in the in-line measurement such as zigzagging of the printed paper, the paper size error and the fan-out (paper stretch due to the tension during printing). Therefore, the measurement data should be robust against those errors.

However, the printing work efficiency is lowered, because the printing operator has to delicately position the printed matter on the measuring apparatus, in order to prevent the positioning error. Further, if there is a positioning error, an incident may occur due to poor measurement accuracy. In order to avoid the poor measurement accuracy, it is indispensable to provide an automatic positioning compensation wherein the measured data is compensated on the basis of a certain positioning standard. However, the paper edge does not become the best standard, because the paper size variation is tolerated up to + 6 mm by JIS for one of the generally used octavo 939×636 mm. Further, even when a prescribed target value is obtained by measuring the color sample of a printed matter or a proof sheet which was printed in the past, the sample print size may possibly be different from the actual print size. This is another reason why the paper position is not the best standard.

Further, the tone control is executed by the ink key opening control for the ink film thickness. Therefore, when the pattern is low image portion (extremely, zero area rate portion), the ink film thickness sensitivity for the measured data becomes low (or zero), thereby lowering the S/N for the control. Thus, it is necessary to select the measured data of the pattern portion suitable for the tone control.

Further, in the conventional tone control, there is disposed at the print margin a control strip which includes a solid patch (mesh area rate 100 % for a single color) which is measured and is converted into a density value, thereby converting the difference between the converted density value and the target density value into the ink key opening. However, the above-mentioned tone control has a disadvantage that the print margin is of no use and the tone is not adjusted due to the difference between the color sample and the printing characteristics of the printing machine.

Therefore, the tone is directly controlled on the basis of a specific pattern of the printed matter to be finished. This is a very effective solution against the above-mentioned disadvantage. On the other hand, the ink quantity should be precisely calculated on the basis of the measured data in the compound color portion.

In order to respond to the misalignment and the screw of the printed matter mounted on the off-line measurement apparatus, a tone measuring method for the color scale or a specific point of a print pattern disclosed in JP2001-293847A. The tone measuring method comprises the steps of: a teaching step for teaching a print position mark such as a color scale position or a registration mark, and a position toe be measured in a print pattern; a detecting step for picking-up the image of the print position mark and identifying the print position mark by the pattern matching; and deviation calculating step for calculating the deviation between the taught position and the detected position, wherein the tone is measured at a point, taking the deviation into consideration.

Further, in the precise calculation of the ink film thickness control, JP11-216846A (1999), the color distance vector of pixels are multiplied by using the prescribed weights and the colors are obtained on the basis of the area coverage of the adjacent pixels and the color distance.

Further, in the ink supply control method as disclosed in JP7-205412A (1995), the multi color ink density spectrum difference between the original and the printed copy, and the spectrum difference is expressed by a linear combination of an individual ink used for the overprinting. The adjustment instruction to the ink supply mechanism is calculated, on the basis of the linear combination coefficients.

However, JP2001-293847A cannot easily precisely position the printed matter against the fan-out (the paper stretch caused by the tension in the printing machine). Further, JP11-216846A (1999) has a disadvantage that the calculation load becomes heavy and an error is introduced into the measured color, due to the area coverage estimation.

Further, JP7-205412A (1995) has a disadvantage that the ink quantity becomes ambiguous, because the linear combination coefficients varies greatly depending upon the dot area rate. Accordingly, the control gain should be lowered, thereby lowering the conversion speed in the feedback control. Thus, the lost papers are increased in the color adjustment process, thereby increasing the printing cost.

Disclosure of the Invention

An object of the present invention is to provide a tone control method and apparatus in a printing machine, wherein the measurement data is stably obtained against various error factors and the ink supply is precisely controlled.
The tone control method of the present invention is a method for calculating control quantities such as an ink key opening and an ink source roller rotation speed, on the basis of prescribed positions in a target print matter and the actual positions in the actually printed matter. The actual positions correspond to said prescribed positions.
The tone control method is characterized in that it comprises the steps of: calculating dot area rate in said target print matter, on the basis of an upstream process data; selectively integrating and averaging along a paper transport direction within a ink key width calculated process dot area rate greater than a prescribed threshold and spectral reflection rate in said actually printed matter; calculating said ink key opening and said ink source roller rotation speed, on the basis of said dot area rate and said spectral reflection rate obtained by said selective integrating and averaging.
Further, the tone control apparatus of the present invention is an apparatus
Characterized in that it comprises: an ink key control means for controlling an ink key opening in said printing machine; an ink source roller control means for controlling an ink source roller rotation speed; an upstream digital data memory for storing process data made at an upstream; a spectral reflection rate data memory for storing spectral reflection rate data measured from a sample printed by said printing machine; a calculation unit; and a control apparatus for instructing said ink key control means and sais ink source roller to control said tone, by making said calculation unit calculate dot area rate along a paper transport direction per a width of said ink key on the basis of said upstream digital data, making said calculation unit execute a selective integral and averaging of said dot area rate calculated on the basis of said process data stored in said upstream digital data memory and said dot area rate in an actually printed matter along said paper transport direction per said with of said ink key, making said calculation unit calculate control quantities such as said ink key opening and said ink source roller rotation speed in said printing machine, on the basis of said dot area rate and said spectral reflection rate obtained by said selective integral and averaging.
In the tone control method, said prescribed positions in said target print matter and said actual positions in said actually printed matter are determined correspondingly with each other in such a manner characterized in that: one or more template images are generated, on the basis of said upstream process data and one or more matching images are generated, on the basis of said upstream process data; and a template matching is executed by using said template images and said matching images.
In the tone control apparatus further comprises: a template image memory for storing a template image selected and generated by said control apparatus on the basis of said upstream digital data; and a matching image memory for storing a matching image selected and generated by said control apparatus on the basis of said spectral reflection rate measured from said sample, wherein said control apparatus executes a matching of said matching image with said template image and calculates a positional relation between said upstream data and said sample printed by said printing machine.
Further, it is an effective means to lent weights on a result of said elective integration and averaging , corresponding to said dot area rate.
Further, as anther effective means, standard single color spectral dot densities at a prescribed area rate Dc ($\lambda$), Dm ($\lambda$), Dy ($\lambda$) and Dk ($\lambda$) for cyan (C), magenta (M), yellow (Y) and balck (K), respectively, at a wavelength $\lambda$ are defined; ink contents tc, tm, ty and tk for cyan (C), magenta (M), yellow (Y) and balck (K), respectively, at said wavelength $\lambda$ are defined; mixed color spectral dot density D ($\lambda$) is defined for said wavelength $\lambda$; a multiple regression calculation is executed by using formula (1), on the basis of said process dot area rate and said spectral reflection rate averaged by said selective integration and averaging; said ink contents tc, tm, ty and tk are calculated; and calculating said ink key opening and said ink source roller rotation speed.

$$
\begin{bmatrix} D_{(\lambda 380m)} \\ D_{(\lambda 390m)} \\ \vdots \\ D_{(\lambda 860m)} \end{bmatrix} = \begin{bmatrix} Dc_{(\lambda 380m)} & Dm_{(\lambda 380m)} & Dy_{(\lambda 380m)} & Dk_{(\lambda 380m)} \\ Dc_{(\lambda 390m)} & Dm_{(\lambda 390m)} & Dy_{(\lambda 390m)} & Dk_{(\lambda 390m)} \\ \vdots & & & \\ Dc_{(\lambda 860m)} & Dm_{(\lambda 860m)} & Dy_{(\lambda 860m)} & Dk_{(\lambda 860m)} \end{bmatrix} \begin{bmatrix} tc \\ tm \\ ty \\ tk \end{bmatrix}
$$

Further, as other effective means, when an ink content is varied from a prescribed threshold: a water source roller rotation speed and a fluctuation of a going and returning roller are controlled; or an alarm is generated for promoting an exterior to check said water source roller rotation speed and said fluctuation of a going and returning.

Brief Description of the Drawings

FIG. 1 is a flow chart for positioning the measurement position in the actual print on the basis of the upstream digital data for the tone control method of the present invention.
FIG. 2 is a flow chart for integrating and averaging the upstream digital data and the ink key.
FIG. 3 is a flow chart for calculating the ink key control quantity on the basis of the spectral reflection rate of the upstream data (target sample) and the actual print (pull-out sample).
FIG. 4 is a block diagram of an exemplary tone control apparatus for the printing machine.

Best Mode for Carrying Out the Invention

The present invention is explained, referring to the drawings. It should be understood that the present invention is not limited to specific sizes, materials and relative arrangements and so on regarding the constituent components, as described in the best mode.

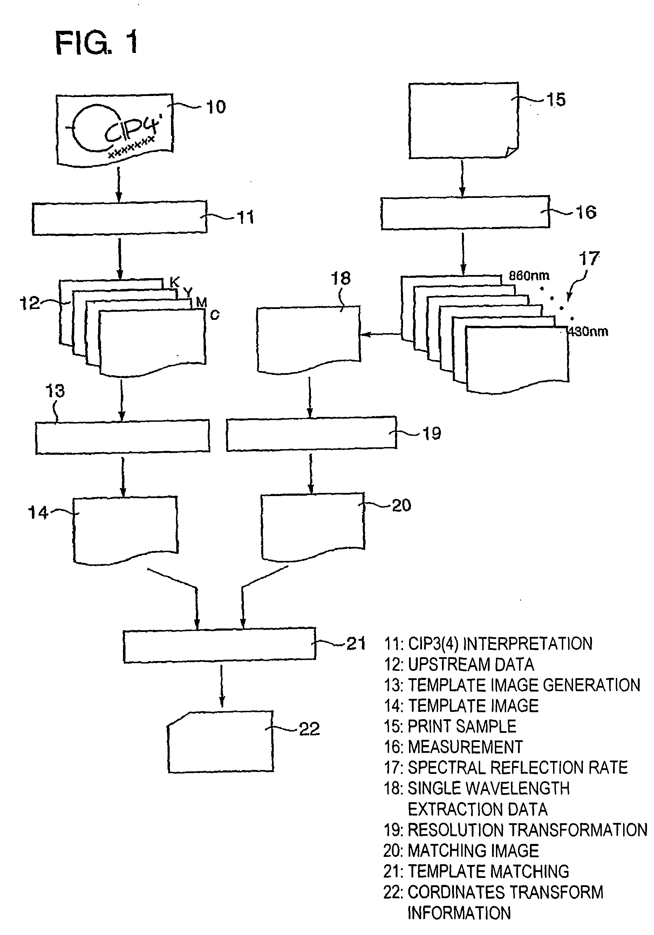

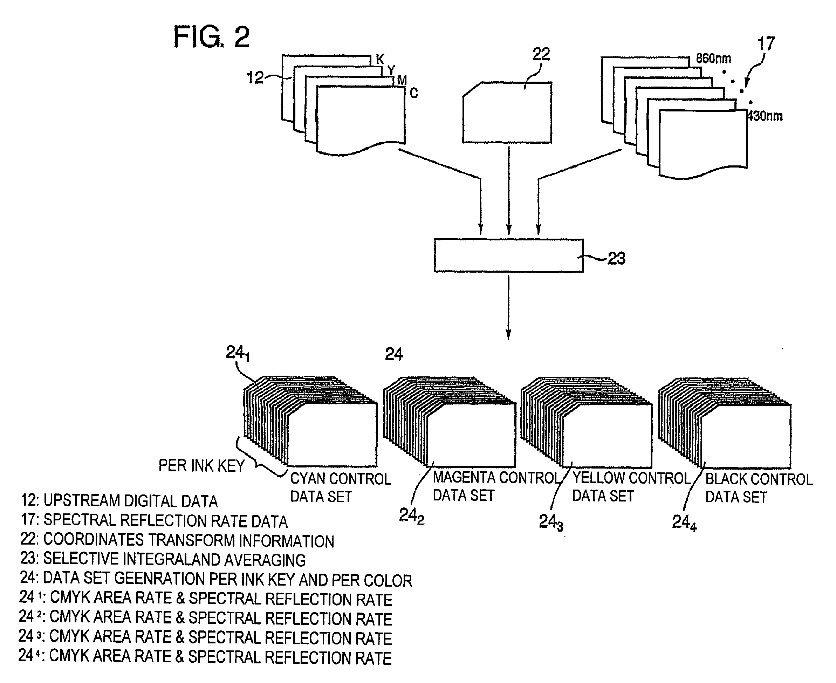

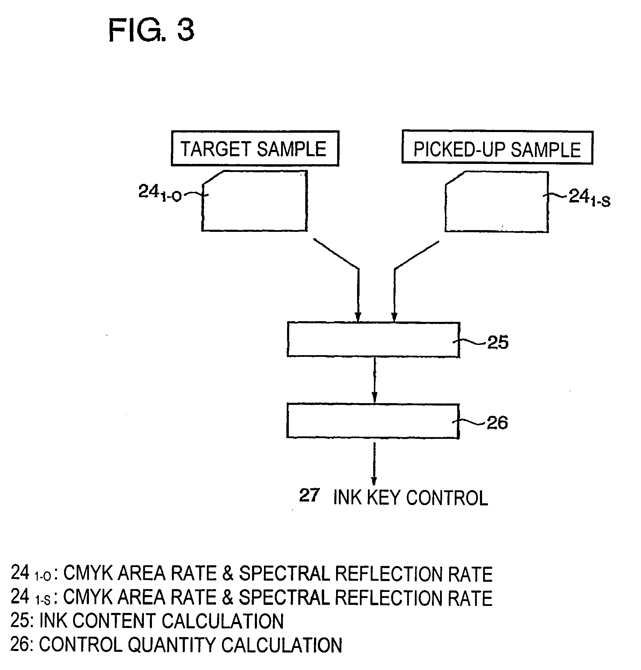

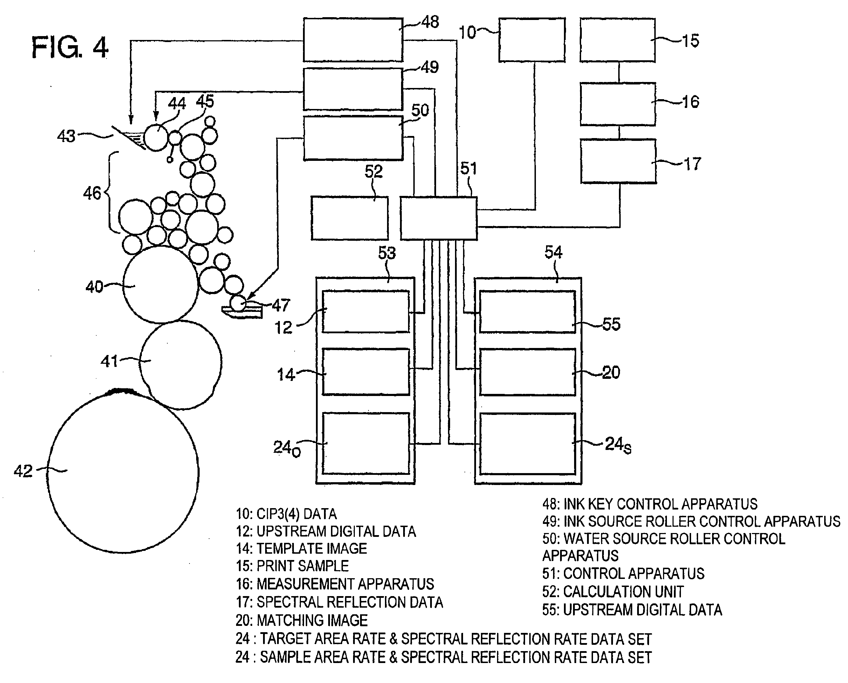

FIG. 1 is a flow chart for positioning the measurement position in the actual print on the basis of the upstream digital data for the tone control method of the present invention. FIG. 2 is a flow chart for integrating and averaging the upstream digital data and the ink key. FIG. 3 is a flow chart for calculating the ink key control quantity on the basis of the spectral reflection rate of the upstream data (target sample) and the actual print (pull-out sample). FIG. 4 is a block diagram of an exemplary tone control apparatus for the printing machine.

Reference numeral 10 in FIG. 1 is a process data from the upstream section such as a process division, i.e., CIP3 (Corporation for Integral of Prepress, Press, Postpress), or CIP4 (The international Coorporation for the Integral of Processes in Prepress, Press and Postpress). Reference numeral 11 is an interpretation of CIP3 or CIP4 for obtaining an upstream digital data 12 for Cyan, Magent, Yellow and Black. Reference numerals 13 is a template image generation for generating a template image 14 for a template matching wherein dot area rate in the upstream digital data 12 is used and is transformed by using the generally known Neugebauer formula and matrix. Reference numeral 15 is an actual print sample. Reference numeral 16 is a measurement of the print sample 15 by a measurement apparatus, for example, wherein a line sensor or two dimensional camera is used and the spectral reflection rate is measured with resolution $0.5 \times 04$ mm in the wavelength range 380 ~860 nm. Reference numeral 17 is the spectral reflection rate data obtained by the measurement 16. Reference numeral 18 is a single wavelength data extracted from the spectral reflection rate data 17. Reference numeral 19 is a resolution transformation for generating a matching image 20 for the template matching by the single wavelength data 18. Reference numeral 21 is a template matching for calculating a position matching the matching image 20. Reference numeral 22 is coordinate transformation information for transforming the coordinates in the print sample 15 in such a manner that the template matching 21 is used and the standard position for the tone measurement in the upstream digital data 12 is referred to.

Reference numeral 23 are a selection integral and a averaging for selectively integrating and averaging along the print paper transporting direction the ink key width corresponding to the tone measurement position at the upstream digital data 12 and the spectral reflection rate data 17. Reference numeral 24 are a dot area rate and spectral reflection rate data set for Cyan (C)$24_1$, Magenta (M) $24_2$, Yellow (Y) $24_3$ and Black (K) $24_4$. Reference numeral 25 is a ink content quality calculation for calculating the ink content quality, on the basis of the obtained target ample, picked-up print sample and the dot area rate. Reference numeral 26 a control quantity calculation such as ink key opening and ink source roller rotation speed, on the basis of the obtained ink content quantity. Reference numeral 27 is a control quantity instruction for an ink key control apparatus 48 and ink source roller 49.

Reference numeral 40 is a plate cylinder. Reference numeral 41 is a blanket cylinder. Reference numeral 42 is an impression cylinder. Reference numeral 43 is an ink key. Reference numeral 44 is an ink source roller. Reference numeral 45 is a ink calling roller. Reference numeral 46 is an ink kneading roller. Reference numeral 47 is a water source roller. Reference numeral 48 is an ink key controls apparatus for controlling the ink key opening. Reference numeral 49 is an ink source roller control apparatus for controlling the rotation speed of the ink source roller. Reference numeral 50 is a water source roller control apparatus for controlling the rotation speed of the water source roller. Rference numeral 51 is a printing machine control apparatus. Reference numeral 52 is a calculation unit for calculating various data. Reference numeral 53 is a memory for the target sample data. Reference numeral 54 is a memory for the data of the print sample data15. Reference numeral 55 is a memory for spectral reflection rate data 17 obtained from the print sample 15measured by the measurement apparatus 16.

First, the outline of the present invention is explained. In the first step, the positioning data is obtained by applying the template matching, in accordance with the flow chart as shown in FIG. 1, on the basis of the process data (the target sample such as an original and a proof (OK sheet)) CIP3 data and CIP4 data made at the upstream and on the basis of the measurement data 15 (the spectral reflection rate data 17), thereby comparing the target print tone and actual printsample tone at the prescribed position.

The tone measurement prescribed standard position is a prescribed position on digital data (target sample) in the upstream digital data 12. Then, the print sample position corresponding to the prescribed standard position is obtained by the template matching. Thus, the positioning information is easily obtained, even when the paper size is varied, or the print sample is translated or rotated on the measurement apparatus. That is, the translation quantity and rotation angle is easily detected.

However, even when the above-mentioned precise positioning is executed, the positioning errors inevitably caused, due to the fan-out (partial extension during the printing) and the spatial resolution. Particularly, the error may become great observed by pixel unit, when the pattern is drastically changed.

Therefore, after obtaining the print sample position corresponding to the target sample on the first step, the second step follows as shown in FIG. 2 wherein the selective integral and averaging 23 are executed along the print paper transport direction within the ink key width corresponding to the above-mentioned print sample position, thereby obtaining the dot area rate and the spectral reflection rate for C, M, Y and K.

Further, in the third step of the flow chart as shown in FIG. 3, the ink content quantity calculation 25 is executed, on the basis of the upstream digital data12 (target sample) and on the basis of the dot area rate and the spectral reflection rate set 24 measured from the print sample. Thus, the calculation 26 of the ink key opening and the rotation speed of the ink source roller is executed thereby executing the control 27 of the ink key opening and the rotation speed of the ink source roller.

Therefore, the measurement data become stable against the various error factors, thereby precisely controlling the ink supply in the printing machine.

FIG. 4 is a tone control apparatus for one of the colors in an off-set printing machine. Reference numeral 40 is a plate cylinder. Reference numeral 41 is a blanket cylinder. Reference numeral 42 is an impression cylinder. The press plate is attached to the plate cylinder 40. The control apparatus 51 instructs the ink key control apparatus 48 to control the opening of the ink key 43, thereby controlling the ink supply quantity by controlling the rotation speed of the ink source roller. The ink is supplied on the press plate through the ink calling roller 45 and the ink kneading roller 46. The ink is further transferred on the blanket cylinder 41 and further is transferred on the print paper passing the impression roller 42.

The tone of the printed matter is controlled by the opening of the ink key controlled by the ink key control apparatus instructed by the control apparatus 51. that is, the tone is further controlled by the rotation speed of the ink source roller 44 controlled by the ink source roller control unit 49, is further controlled by the rotation speed of the water source roller 47 controlled by the water source roller control unit 50, and is further controlled by the fluctuation control of a going and returning roller.

The printing unit as shown in FIG. 4 is a single color unit. Therefore, one color unit is provided for each color in the full color printing unit. The ink key control apparatus 48, the ink source roller control apparatus 49 and the water source roller control apparatus 50 are provided in each color unit. Although the tone control apparatus is provided in the printing machine, the control apparatus 51, calculation unit 52, target sample memory 53 and print sample memory 54 may be independent as the tone control apparatus, or may be incorporated in the tone measurement apparatus.

FIG. 1 shows the first step of the tone control method of the present invention. That is, FIG. 1 is a flow chart for positioning the upstream digital data 12 (target sample) to the actual printed matter 15 (print sample). As already explained, the template matching is applied, in order to cope with various errors due to the zigzagging of the print paper included in the line sensor data or the two dimensional camera data, due to the paper size, or due to the fan-out extension which is the partial extension of the print paper during the printing.

Reference numeral 10 as shown in FIG. 1 is a process data obtained at the upstream such as the process division. The process data includes dot area rate information with a spatial resolution, e.g. , about $0.5 \times 0.5$ mm. Then, in the next step as shown by reference numeral 11, the control apparatus 51 as shown in FIG. 4 interprets the CIP3 data or CIP4 data, generates the upstream digital data 12 which are the image data for C, M, Y and K, and stores the upstream digital data 12 in the upstream digital data memory in the target sample data memory 53. Further, in the next step as shown in reference numeral 13, the control apparatus 51 uses the dot area rate data in the upstream digital data 12, executes the transformation by using the Neugebauer formula and matrix, generates the template image 14 which is an approximated image for the template matching , and stores the template image in the template image memory 14 in the target sample data memory 53.

On the other hand, the print sample actually printed by the printing machine is mounted on the measurement apparatus wherein, as already explained, for example, the line sensor or the two dimensional camera with the spatial resolution, e.g., about $0.5 \times 0.4$ mm in the wavelength range 380~860 nm, the print sample is measured in the step as shown by reference numeral 16, and the spectral reflection rate is obtained in the step as shown by reference numeral 17. The control apparatus 51 stores the spectral reflection rate in the spectral reflection rate memory 55 in the print sample data memory 54.

Next, in the step as shown by reference numeral 18 in FIG. 1, the control apparatus 51 extracts the single wavelength extraction data 18 from the spectral reflection rate data stored in the spectral reflection rate data memory 55. That is, from the spectral reflection rate data, a reflection rate data for a specific wavelength is extracted, the resolution transformation is executed in the step as shown by reference numeral 19, in order to match the data with the resolution of the template image 14, and the matching image as shown by reference numeral 20 is generated. The color image may be generated by applying appropriate RGB filters, when the template matching is executed in color.

After obtaining the template image 14 and the matching image 20, the control apparatus 51 calculates, by the generally used template matching 21 in the calculation unit 52, the position where those images coincide, the coordinate transformation information 22 for transforming the coordinates in the print sample 14 to the standard coordinates for the color measurement in the process data.

Next, The control apparatus 51 compares at the same position the tone in the upstream digital data 12 with that in the spectral reflection rate data 17 by using the coordinate transformation information. However, as already explained, even when the positioning is precisely executed, there may be caused another error such as position fluctuation error due to the fan-out of the partial extension of the print paper during printing, and due to the spatial resolution, and other error due to the pixel error when the print pattern is drastically changed. Accordingly, after obtaining the position in the actual print sample 15 corresponding to the position for the tone control in the upstream digital data 12 (the target sample), the selective integral and the averaging 23 along the print paper transport direction within the ink key width corresponding the obtained position is executed by the calculation unit 52, and, on the basis of the obtained information, the dot area rate and the spectral reflection rate data set $24_1$, $24_2$, $24_3$ and $24_4$ of C, M, Y and K in the upstream digital data 12 and the print sample 15.

The tone control in the printing machine is mainly executed by the control of the ink key opening within the ink key width, for example, 35 mm. Accordingly, within the width 35 mm, the errors are reduced by the selective integral and averaging, thereby excluding the fluctuation factor of the paper size. Further, the ink key position in the printing machine can easily correspond to the center position along the width direction of the upstream digital data 12 which is defined to be the center of the effective printing width of the printing machine.

However, the selective integral may possibly degrade the S/N for the ink key control, depending upon the print pattern. For example, when the octavo 939×636 mm is used and the area 10×10 mm is to be controlled at the area rate 100 % at a certain ink key position in the octavo, the average area rate of the ink becomes (10×10)/(636×35) ×100 = 0.45 % by a mere selective integral and averaging. Accordingly, the averaged data includes the data irrelevant to the print ink, thereby extremely lowering the S/N.

The above-mentioned disadvantage can be avoided by selecting the points where the dot area rate is greater than a threshold and by executing the selective integral. The threshold is preferably greater than 25 %. Although the stable data is obtained at the pattern point for the higher threshold, the integral points may become extremely decreased, thereby obtaining only insufficient integral effect. Therefore, about 25 % is appropriate for the practically effective control.

Therefore, the control apparatus 51 searches the print paper transport direction data every ink key position an the upstream digital data memory in the target sample data memory 53, thereby executing, by the calculation unit 52, the selective integral and averaging of the area rate data every color at the positions where the dot area rate is greater than 25 %. Further, the area rate in the print sample data memory 54, the area rate and the spectral reflection rate in the spectral reflection rate data memory 55 is extracted by using the positioning information obtained by the template matching as shown by reference numeral 21 in FIG. 1, and the selective integral and averaging is executed.

Thus, according to the positioning effect by the template matching 12 and the effect of the selective integral and averaging, the data set robust against the position fluctuation is obtained as the averaged dot area rate and spectral reflection rate. The analyses as shown in FIG. 1 and FIG. 2 are executed for every color for tone control at the ink key position in the upstream digital data 12 and the print sample data 15, thereby obtaining e.g., 120 data in total (30 data $24_1$ for C, 30 data $24_2$ for M, 30 data $24_3$ for Y and 30 data $24_4$ for K). Those 120 data are stored in the target area rate and spectral reflection rate data memory $24_0$ in the target sample memory data memory 53 for the upstream digital data 12. the spectral reflection rate data 17 in the print sample 15 is stored in spectral reflection rate data set memory 24s in the print sample data memory 54.

It is the best for the printing machine to completely reproduce the target colors. However, all colors of the print pattern are not always reproduced, when the dot gain characteristics in the target print sample and in the actual printing machine differ. In this case, it becomes necessary to mainly control the tone at the solid part or the half tone part of the print pattern, or a part of an arbitrary color.

Those necessities are solved by a weighted selective integral and averaging for the upstream digital data 12. For example, the difference such as a function of the Euclid distance between the CMYK area rate to be mainly controlled and the CMYK area rate at the integral points is employed as the weight. Thus, the sensitivity of the highly weighted print pattern is increased and the tone of the arbitrary color can be controlled.

After obtaining 30 data $24_1$ for C, 30 data $24_2$ for M, 30 data $24_3$ for Y and 30 data $24_4$ for K, the ink excess and deficiency is calculated, in accordance with the flow chart as shown in FIG. 3.

The mixed color dot of which area rates are Sc, Sm, Sy and Sk for C, M, Y and K is a superposition of single color dot. Accordingly, when the single color reflection rate is transformed into the density, the addition of the single color density becomes the density of the mixed color dot.

Accordingly, the ink content "t" becomes unity, when the standard single color dot density at the area rate S is defined beforehand, the ink contents "t"s in the actual mixed color dot are multiplied, the ink contents "t"s are assumed to be each single color dot density in the actual mixed color dot, and the ink of the standard single color density is assumed to exist in the mixed color dot.

Thus, the mixed color spectral density D(λ) is expressed by formula (1), where Dc (λ), Dm (λ), Dy (λ) and Dk (λ) are the standard single color dot spectral density for C, M, Y and K, and tc, tm, ty and tk are the ink content for C, M, Y and K.

$$\begin{bmatrix} D_{(\lambda 380m)} \\ D_{(\lambda 390m)} \\ \vdots \\ D_{(\lambda 860m)} \end{bmatrix} = \begin{bmatrix} Dc_{(\lambda 380m)} & Dm_{(\lambda 380m)} & Dy_{(\lambda 380m)} & Dk_{(\lambda 380m)} \\ Dc_{(\lambda 390m)} & Dm_{(\lambda 390m)} & Dy_{(\lambda 390m)} & Dk_{(\lambda 390m)} \\ & & \vdots & \\ Dc_{(\lambda 860m)} & Dm_{(\lambda 860m)} & Dy_{(\lambda 860m)} & Dk_{(\lambda 860m)} \end{bmatrix} \begin{bmatrix} tc \\ tm \\ ty \\ tk \end{bmatrix} \quad \cdots\cdots (1)$$

Here, the way to use formula (1) is explained. Using the selective integral and averaging (average dot area rate and spectral reflection rate) 24 per each ink key, the control apparatus 51 transforms the spectral reflection rate into the spectral density by using the calculation unit 52 in the ink content calculation 25, thereby determining the standard single color spectral dot density Dc (λ), Dm (λ), Dy (λ) and Dk (λ) on the basis of the averaged area rate and substituting them into formula (1). Further, using formula (1), the multiple regression calculation is executed, thereby obtaining the ink contents at the mixed color dot tc, tm, ty and tk.

The control apparatus 51 uses the calculation unit 52 to calculate the multiple regression for the target data set $24_0$ (only the data set $24_{1-0}$ for C is shown in FIG. 3) and for the actual data set in the printing machine 24s (only the data set $24_1$_s for C is shown in FIG. 3). Then, the ink contents are compared in the control quantity calculation 26, in order to obtain the ink excess or deficiency. Here, the ratio "n" is defined by formula (2).

$$n = t_{target} / t_{now} \qquad (2)$$

where " $t_{target}$ " is the target ink content and " $t_{now}$ " is the actual ink content.

If "n" is greater than 1, the ink is deficient. On the other hand if "n" is smaller than 1, the ink is excessive. Thus, it is precisely determined on the basis of formula (2) how much per cent the ink supply should be changed. Further, The high speed feedback control can be realized, because the ink key control instruction 27 is sent to the ink key control apparatus 28 and ink source roller control apparatus 49.

For example, it is assumed that the actual ink key opening is 100 μm and the ink deficiency is 10 %. Then, ink key opening should be narrowed by 100 μm×0.1 = 10μm, thereby approximating the target ink content. Of course, the accuracy is improved by using gain adjust coefficients, the data measured in the past and learning feedback by the number of times of printing.

In order to calculate formula (1), Dc (λ), Dm (λ). Dy (λ) and Dk (λ) may be the single color dot spectral density of the solid pattern, because the single color dot is approximated by the multiplication by the single color solid part spectral density. Further, the spectroscopic measurement can be executed by using at least the absorption wavelength of C, M, Y and preferably a infrared wavelength for black (K).

Although the positions of the dot area rate greater than 25 % was selectively integrated and averaged by the area rate data calculation apparatus 52, on the basis of the search of the print paper transport direction data, the selective integral and averaging may be executed for the dot area rate greater than a prescribed rate in the upstream digital data 12 itself.

Further, although the selective integral and averaging 23 was executed along the print paper transport direction per ink key width, the fluctuation along the ink key arrangement direction is smoothed, if the integral is executed along the ink key width direction by rotaing the integral direction by 90°. If the water supplied by the rotation of the water source roller 47, the water the ink is attached at positions where the ink should no be attached, thereby causing ooze-out of the ink between the dot points (originally white part), contaminating the originally white part and making the color deep. That is, the deep color portion mat be caused by the water supply deficiency, when the integral result is varied along the print paper transport direction. Accordingly, when the integral result is varied along the print paper transport direction, a warning may be generated in order to check the rotation speed of the water source roller and the fluctuation control of the going and returning roller.

According to the present invention, the target dot area rate on the basis of the upstream process data is calculated. The calculated process dot area rate data greater than a threshold and the spectral reflection rate data of the actually printed matter are selectively integrated and averaged along the print paper transport direction within the ink key width. Then, on the basis of the averaged dot area rate and the spectral reflection rate, the control quantities such as the ink key opening and the ink source roller rotation speed are calculated in order to control the tone. Thus, the measurement data stable against the various error factors such as the fan-out which is a partial extension of the print paper during printing, posision fluctuation due to the spectral resolution and the pixel unit error in the drastically changed print pattern. Thus, the present invention provides a precise tone control method and apparatus for the printing machine.

When the tone control method is executed, The correspondence between the tone control position in the target process data and that in the actually printed matter is calculated by the template matching, thereby obtaining the precise correspondence, even when there are various errors such as the mounting error on the measurement apparatus. The zigzaging of the print paper and the paper size. Accordingly, the operator does not need to worry about the precise mounting of the print paper. Thus, the operation efficiency is not lowered and the poor measurement is not caused.

Further, the tone of desired positions are controlled with priority, by using the weight corresponding to the dot area rate on the basis of the selective integral and averaging per each ink key width.

Further, the target area data is calculated on the basis of the upstream process data. Then, the calculated dot area rate greater than a threshold and the spectral reflection rate of the actually printed matter are selectively integrated and averaged along the print paper transport direction within the ink key width along the ink key arrangement direction. If the ink content in accordance with the selective integral and averaging is varied from the threshold, the water source roller rotation speed and the fluctuation of the going and returning roller are controlled, an alarm is generated in order to promote an exterior to check the rotation speed and the fluctuation. Thus, the poor tone control not only due to the ink quantity but also due to the water source roller.

Industrial applicability

As already explained, the target dot area rate on the basis of the upstream process data is calculated. The calculated process dot area rate data greater than a threshold and the spectral reflection rate data of the actually printed matter are selectively integrated and averaged along the print paper transport direction within theb ink key width. Then, on the basis of the averaged dot area rate and the spectral reflection rate, the control quantities such as the ink key opening and the ink source roller rotation speed are calculated in order to control the tone. Thus, the measurement data stable against the various error factors such as the fan-out which is a partial extension of the print paper during printing, posision fluctuation due to the spectral resolution and the pixel unit error in the drastically changed print pattern. Thus, the present invention provides a precise tone control method and apparatus for the printing machine.

When the tone control method is executed, The correspondence between the tone control position in the target process data and that in the actually printed matter is calculated by the template matching, thereby obtaining the precise correspondence, even when there are various errors such as the mounting error on the measurement apparatus. The zigzaging of the print paper and the paper size. Accordingly, the operator does not need to worry about the precise mounting of the print paper. Thus, the operation efficiency is not lowered and the poor measurement is not caused.

Further, the tone of desired positions are controlled with priority, by using the weight corresponding to the dot area rate on the basis of the selective integral and averaging per each ink key width.

Further, the target area data is calculated on the basis of the upstream process data. Then, the calculated dot area rate greater than a threshold and the spectral reflection rate of the actually printed matter are selectively integrated and averaged along the print paper transport direction within the ink key width along the ink key arrangement direction. If the ink content in accordance with the selective integral and averaging is varied from the threshold, the water source roller rotation speed and the fluctuation of the going and returning roller are controlled, an alarm is generated in order to check the rotation speed and the fluctuation. Thus, the poor tone control not only due to the ink quantity but also due to the water source roller.

**Claims**

1. A tone control method in a printing machine wherein calculations are executed on control quantities such as an ink key opening and an ink source roller rotation speed, on the basis of prescribed positions in a target print matter and the actual positions in the actually printed matter, said actual positions being corresponding to said prescribed positions, which comprises the steps of:

calculating dot area rate in said target print matter, on the basis of an upstream process data;
selectively integrating and averaging along a paper transport direction within a ink key width calculated process dot area rate greater than a prescribed threshold and spectral reflection rate in said actually printed matter;
calculating said ink key opening and said ink source roller rotation speed, on the basis of said dot area rate and said spectral reflection rate obtained by said selective integrating and averaging.

2. The tone control method according to claim 1, wherein said prescribed positions in said target print matter and said actual positions in said actually printed matter are determined correspondingly with each other in such a manner that:

one or more template images are generated, on the basis of said upstream process data and one or more matching images are generated, on the basis of said upstream process data; and
a template matching is executed by using said template images and said matching images.

3. The tone control method according to claim 1 or 2, wherein weights are lent on a result of said elective integration and averaging , corresponding to said dot area rate.

4. The tone control method according to one of claims 1 through 3, wherein:

standard single color spectral dot densities at a prescribed area rate Dc ($\lambda$), Dm ($\lambda$), Dy ($\lambda$) and Dk ($\lambda$) for cyan (C), magenta (M), yellow (Y) and balck (K), respectively, at a wavelength $\lambda$ are defined;
ink contents tc, tm, ty and tk for cyan (C), magenta (M), yellow (Y) and balck (K), respectively, at said wavelength $\lambda$ are defined;
mixed color spectral dot density D ($\lambda$) is defined for said wavelength $\lambda$;
a multiple regression calculation is executed by using formula (1), on the basis of said process dot area rate and said spectral reflection rate averaged by said selective integration and averaging;
said ink contents tc, tm, ty and tk are calculated; and
calculating said ink key opening and said ink source roller rotation speed.

5. The tone control method according to one of claims 1 through 4, wherein, when an ink content is varied from a prescribed threshold:

a water source roller rotation speed and a fluctuation of a going and returning roller are controlled; or
an alarm is generated for promoting an exterior to check said water source roller rotation speed and said fluctuation of a going and returning.

$$\begin{bmatrix} D_{(\lambda 380m)} \\ D_{(\lambda 390m)} \\ \vdots \\ D_{(\lambda 860m)} \end{bmatrix} = \begin{bmatrix} Dc_{(\lambda 380m)} & Dm_{(\lambda 380m)} & Dy_{(\lambda 380m)} & Dk_{(\lambda 380m)} \\ Dc_{(\lambda 390m)} & Dm_{(\lambda 390m)} & Dy_{(\lambda 390m)} & Dk_{(\lambda 390m)} \\ & & \vdots & \\ Dc_{(\lambda 860m)} & Dm_{(\lambda 860m)} & Dy_{(\lambda 860m)} & Dk_{(\lambda 860m)} \end{bmatrix} \begin{bmatrix} tc \\ tm \\ ty \\ tk \end{bmatrix}$$

6. A tone control apparatus in a printing machine which comprises:

an ink key control means for controlling an ink key opening in said printing machine;
an ink source roller control means for controlling an ink source roller rotation speed;
an upstream digital data memory for storing process data made at an upstream;
a spectral reflection rate data memory for storing spectral reflection rate data measured from a sample printed by said printing machine;
a calculation unit; and
a control apparatus for instructing said ink key control means and said ink source roller to control said tone, by making said calculation unit calculate dot area rate along a paper transport direction per a width of said ink key on the basis of said upstream digital data,
making said calculation unit execute a selective integral and averaging of said dot area rate calculated on the basis of said process data stored in said upstream digital data memory and said dot area rate in an actually printed matter along said paper transport direction per said with of said ink key,

making said calculation unit calculate control quantities such as said ink key opening and said ink source roller rotation speed in said printing machine, on the basis of said dot area rate and said spectral reflection rate obtained by said selective integral and averaging.

7. The tone control apparatus according to claim 6, which further comprises:

a template image memory for storing a template image selected and generated by said control apparatus on the basis of said upstream digital data; and

a matching image memory for storing a matching image selected and generated by said control apparatus on the basis of said spectral reflection rate measured from said sample,

wherein said control apparatus executes a matching of said matching image with said template image and calculates a positional relation between said upstream data and said sample printed by said printing machine.

# FIG. 1

11: CIP3(4) INTERPRETATION
12: UPSTREAM DATA
13: TEMPLATE IMAGE GENERATION
14: TEMPLATE IMAGE
15: PRINT SAMPLE
16: MEASUREMENT
17: SPECTRAL REFLECTION RATE
18: SINGLE WAVELENGTH
    EXTRACTION DATA
19: RESOLUTION TRANSFORMATION
20: MATCHING IMAGE
21: TEMPLATE MATCHING
22: CORDINATES TRANSFORM
    INFORMATION

# FIG. 2

12: UPSTREAM DIGITAL DATA
17: SPECTRAL REFLECTION RATE DATA
22: COORDINATES TRANSFORM INFORMATION
23: SELECTIVE INTEGRALAND AVERAGING
24: DATA SET GEENRATION PER INK KEY AND PER COLOR
24 [1]: CMYK AREA RATE & SPECTRAL REFLECTION RATE
24 [2]: CMYK AREA RATE & SPECTRAL REFLECTION RATE
24 [3]: CMYK AREA RATE & SPECTRAL REFLECTION RATE
24 [4]: CMYK AREA RATE & SPECTRAL REFLECTION RATE

EP 1 721 743 A1

# FIG. 3

TARGET SAMPLE

$24_{1\text{-}o}$

PICKED-UP SAMPLE

$24_{1\text{-}s}$

25

26

**27** INK KEY CONTROL

24 $_{1\text{-}o}$: CMYK AREA RATE & SPECTRAL REFLECTION RATE
24 $_{1\text{-}s}$: CMYK AREA RATE & SPECTRAL REFLECTION RATE
25: INK CONTENT CALCULATION
26: CONTROL QUANTITY CALCULATION

FIG. 4

10: CIP3(4) DATA
12: UPSTREAM DIGITAL DATA
14: TEMPLATE IMAGE
15: PRINT SAMPLE
16: MEASUREMENT APPARATUS
17: SPECTRAL REFLECTION DATA
20: MATCHING IMAGE
24 : TARGET AREA RATE & SPECTRAL REFLECTION RATE DATA SET
24 : SAMPLE AREA RATE & SPECTRAL REFLECTION RATE DATA SET

48: INK KEY CONTROL APPARATUS
49: INK SOURCE ROLLER CONTROL APPARATUS
50: WATER SOURCE ROLLER CONTROL APPARATUS
51: CONTROL APPARATUS
52: CALCULATION UNIT
55: UPSTREAM DIGITAL DATA

EP 1 721 743 A1

**INTERNATIONAL SEARCH REPORT**

| International application No. |
| --- |
| PCT/JP2004/016458 |

| A. CLASSIFICATION OF SUBJECT MATTER |
| --- |
| Int.Cl⁷ B41F31/02, B41F31/04, B41F33/00, B41F33/14, G01J3/46, G01N21/27 |

According to International Patent Classification (IPC) or to both national classification and IPC

| B. FIELDS SEARCHED |
| --- |
| Minimum documentation searched (classification system followed by classification symbols)<br>Int.Cl⁷ B41F31/02, B41F31/04, B41F33/00, B41F33/14, G01J3/46, G01N21/27 |

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2004 |
| Kokai Jitsuyo Shinan Koho | 1971–2004 | Toroku Jitsuyo Shinan Koho | 1994–2004 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y<br>A | JP 2001-353852 A (Dainippon Screen Mfg.Co., Ltd.),<br>25 December, 2001 (25.12.01),<br>Par. Nos. [0049] to [0085]; all drawings<br>(Family: none) | 1-4,6-7<br>5 |
| Y<br>A | JP 2001-18364 A (Toppan Printing Co., Ltd.),<br>23 January, 2001 (23.01.01),<br>Par. Nos. [0021] to [0026]; Fig. 3<br>(Family: none) | 1-4,6-7<br>5 |
| Y<br>A | JP 2002-301807 A (Mitsubishi Heavy Industries, Ltd.),<br>15 October, 2002 (15.10.02),<br>Par. Nos. [0010] to [0029]; all drawings<br>(Family: none) | 1-4,6-7<br>5 |

| ☒ Further documents are listed in the continuation of Box C. | ☐ See patent family annex. |
| --- | --- |

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>24 December, 2004 (24.12.04) | Date of mailing of the international search report<br>18 January, 2005 (18.01.05) |
| --- | --- |
| Name and mailing address of the ISA/<br>Japanese Patent Office | Authorized officer |
| Facsimile No. | Telephone No. |

Form PCT/ISA/210 (second sheet) (January 2004)

## INTERNATIONAL SEARCH REPORT

| International application No. |
| --- |
| PCT/JP2004/016458 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 2001-219540 A  (Toppan Printing Co., Ltd.),<br>14 August, 2001 (14.08.01),<br>Par. Nos. [0015] to [0023]; Fig. 2<br>(Family: none) | 1-4,6-7<br>5 |
| Y | JP 7-52367 A  (Kabushiki Kaisha Hyutekku),<br>28 February, 1995 (28.02.95),<br>Par. Nos. [0009] to [0011]<br>(Family: none) | 2,7 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001293847 A
- JP 11216846 A
- JP 7205412 A